# EUROPÄISCHE PATENTANMELDUNG

(11) **EP 2 006 645 A2**
(43) Veröffentlichungstag der Anmeldung: **24.12.2008**
(21) Anmeldenummer: 08104217.8
(22) Anmeldetag: 02.06.2008
(51) Int. Cl.: G01D 11/28

(54) **Zeigerinstrument**

(30) Priorität: 21.06.2007 DE 102007028641
(71) Anmelder: SIEMENS AKTIENGESELLSCHAFT, 80333 München (DE)
(72) Erfinder: Schwebel, Tim Dr., 80337 München (DE); Blume, Heinrich-Jochen Dr., 64291 Darmstadt (DE); Gottlieb, Bernhard Dr., 81739 München (DE); Kappel, Andreas Dr., 85649 Brunnthal (DE); Kissel, Robert Wolfgang Dr., 63329 Egelsbach (DE); Mittenbühler, Karl-Heinz, 64347 Griesheim (DE); Wallenhauer, Carsten, 01987 Schwarzheide (DE)

(57) **Zusammenfassung**

Das Zeigerinstrument für Fahrzeuge ist abhängig von einem vorbestimmten Zustand auf unterschiedliche Art beleuchtbar.

## Beschreibung

Die Erfindung betrifft ein Zeigerinstrument für Fahrzeuge, ein Fahrzeug mit einem Zeigerinstrument und ein Verfahren zum Beleuchten des Zeigerinstruments.

Die Zeigerinstrumente heutiger Kraftfahrzeuge (z. B. Drehzahlmesser, Tachometer, Temperaturanzeige etc.) weisen einen für das jeweilige Zeigerinstrument typischen Wertebereich auf (z. B. einer Umdrehungszahl, einer Fahrzeuggeschwindigkeit, einer Wasser- oder Öltemperatur usw.). Häufig sind kritische Wertebereiche (z. B. einer kritischen Motordrehzahl oder Temperatur) in einer zum übrigen Wertebereich unterschiedlichen Farbe fest ausgestaltet, z. B. in rot. Die Zeigerinstrumente werden typischerweise beleuchtet, wenn ein Fahrzeugscheinwerfer eingeschaltet ist, zum Teil in einer markenspezifischen Farbe.

Es ist die Aufgabe der vorliegenden Erfindung, eine Möglichkeit zur Steigerung der Fahrattraktivität und / oder der Betriebs- und Fahrsicherheit von Fahrzeugen zu ermöglichen.

Diese Aufgabe wird durch ein Zeigerinstrument nach Anspruch 1, ein Fahrzeug nach Anspruch 14 und ein Verfahren nach Anspruch 15 gelöst.

Das Zeigerinstrument, das typischerweise einen beweglichen Zeiger zur Anzeige eines variablen Betriebszustands des Fahrzeugs aufweist, ist abhängig von einem vorbestimmten Zustand auf unterschiedliche Art beleuchtbar. Dieser Zustand kann der variable Betriebszustand des Fahrzeugs oder ein anderer, fahrzeuginterner oder -externer, Zustand sein. Durch dieses Zeigerinstrument wird eine Beleuchtungsart, z. B. eine Farbe und / oder eine Blinkfolge usw., dem Fahrer als Information mitgegeben. Dadurch kann entweder eine bereits anderweitig angezeigte Information optisch verstärkt werden (z. B. ein Erreichen eines kritischen Bereichs), oder es kann auf einfache Weise eine zusätzliche Information bereitgestellt werden. Das Zeigerinstrument verwendet also eine Farb- und / oder Helligkeitskodierung der Zeigerinstrumentenbeleuchtung zusammen mit aktuellen, insbesondere zeitveränderlichen Zuständen. Daraus ergibt sich eine Steigerung der Fahrattraktivität, der Betriebs- und Fahrsicherheit von Fahrzeugen.

Die Beleuchtungsart ist vorzugsweise unabhängig vom Anschalten eines Fahrzeugscheinwerfers; bei Anschalten eines Fahrzeugscheinwerfers verändert sich bevorzugt (zustandsunabhängig) nur ein Beleuchtungsstärkeniveau. Alternativ ist die Zeigerinstrumentenbeleuchtung nur bei angeschalteter Fahrzeugbeleuchtung aktiv.

Vorzugsweise ist nur der bzw. sind nur die Zeiger des Zeigerinstruments auf unterschiedliche Art beleuchtbar. Alternativ kann eine Ausführungsform bevorzugt werden, bei der eine Skalenanzeige des Zeigerinstruments auf unterschiedliche Art beleuchtbar ist. Es kann zur Verstärkung der optischen Wirkung vorteilhaft sein, wenn sowohl der Zeiger als auch die Skalenanzeige des Zeigerinstruments auf unterschiedliche Art beleuchtbar sind.

Es ist besonders effektiv und damit vorteilhaft, wenn das Zeigerinstrument abhängig von dem vorbestimmten Zustand in unterschiedlichen Farben beleuchtbar ist. Insbesondere vorteilhaft ist die Verwendung von Farben mit bekannter Symbolwirkung oder allgemein verstandener Wirkung.

Vorzugsweise ist in einer Ausführungsform die Beleuchtungsfarbe von grün (unkritischer Zustand) auf rot (kritischer Zustand) änderbar, oder zurück, z. B. bei einer Motortemperatur- oder Ölstandsanzeige. Zur genaueren Abstufung ist die Beleuchtungsfarbe vorzugsweise zwischen - in dieser Reihenfolge - grün, gelb und rot wechselbar, oder umgekehrt, z. B. bei einem Drehzahlmesser oder Tachometer.

Neben zu einem Zeitpunkt einfarbiger Beleuchtung kann es auch vorteilhaft sein, das Zeigerinstrument mehrfarbig zu beleuchten. Beispielsweise kann zur erweiterten Markendifferenzierung bei der Fahrzeuginitialisierung (z. B. im Zustand 'Zündung ein') der Zeiger blau-weiß leuchten oder aufblinken.

Zur mehrfarbigen Beleuchtung weist das Zeigerinstrument vorzugsweise mindestens eine Mehrfarbenbeleuchtung, insbesondere eine Mehrfarben-LED, auf. Alternativ können mehrere einfarbige LEDs oder andere Arten von Leuchtquellen verwendet werden. Zur guten Lichtleitung und -abstrahlung sind der Zeiger und / oder die Skalenanzeige aus Kunststoff, insbesondere transparent ausgebildet.

Statt eines Farbwechsels, oder zusätzlich zu einem Farbwechsel kann die Beleuchtungsart abhängig von dem vorbestimmten Zustand zwischen blinkend und nicht blinkend wechseln. Beispielsweise kann zur noch weiter verstärkten Warnwirkung, ein Zeiger eines Drehzahlmessers oder eines Tachometers bei Überschreitung eines kritischen Schwellwerts von einer roten Dauerbeleuchtung zu einer rot blinkenden Beleuchtung übergehen, z. B. im Rahmen einer Abfolge grün (- gelb) - rot - rot blinkend.

Vorzugsweise ist ein Tachometer abhängig von einem Geschwindigkeitswert unterschiedlich beleuchtbar, z. B. grün (-gelb) -rot.

Vorzugsweise ist ein Drehzahlmesser abhängig von einem Wert einer Motordrehzahl unterschiedlich beleuchtbar, z. B. grün - gelb - rot - rot blinkend.

Vorzugsweise ist eine Wassertemperaturanzeige abhängig von einem Wert einer Wassertemperatur T unterschiedlich beleuchtbar, z. B. nach dem folgenden Muster:

| | |
|---|---|
| T < 85°C | Zeigerbeleuchtung grün dauer |
| 85°C < T < 95 °C | Zeigerbeleuchtung gelb dauer |
| T > 95°C | Zeigerbeleuchtung rot dauer |
| T > 120°C | Zeigerbeleuchtung rot blinkend |

Vorzugsweise ist eine Ölstandsanzeige abhängig von einem Pegel eines Ölstands unterschiedlich beleuchtbar, z. B. grün und rot (bei kritisch niedrigem Ölpegel).

Allgemein kann die Beleuchtungsart bei Eintreten eines bestimmten Zustands verändert werden. Der Zustand kann fahrzeuginterne und / oder fahrzeugexterne Zustände umfassen. Als Zustände können beispielsweise verwendet werden:
Fahrzeugintern:
   - Vorliegen einer Fahrzeuginitialisierung;
   - Vorliegen eines Zeigeranschlags;
   - Vorliegen einer Fehlererkennung
Fahrzeugextern:
   - Vorliegen einer Geschwindigkeitsbegrenzung;
   - Vorliegen einer Stauwarnung;
   - Vorliegen eines Parkverbots;
   - Vorliegen einer Glättegefahr.

So kann eine Instrumentenbeleuchtungsart geändert werden, wenn eine bestimmte Kombination interner und externer Zustände vorliegt. Ferner kann ein Zeiger eines Zeigerinstruments, z. B. die Tachonadel, blinken, wenn eine Information über eine Position und vorzugsweise Geschwindigkeit des Fahrzeugs mit einer Stauwarnung, einer Warnung über eine Glättegefahr, einem Vorliegen eines Parkverbots oder einer Geschwindigkeitsbegrenzung (z. B. 30er-Zone) usw. kombiniert wird. Die Position und Geschwindigkeit des Fahrzeugs lassen sich beispielsweise über ein bordeigenes Navigationssystem, vorzugsweise auf der Grundlage von GPS, ermitteln. Allgemein lassen sich Umgebungszustände bzw. -daten mittels einer telemetrischen Ankopplung des Fahrzeugs an seine Umwelt erlangen, z. B. mittels Radio, TMC, streckenpostierten drahtlosen Informationssystemen, Daten aus Navigationssystemen (z. B. GPS), und so weiter.

Allgemein können interne und externe Informationsdaten (Fahrzeugzustände, Umgebungszustände) zeitlich veränderliche Zustände ergeben, die je nach Eingruppierung bzw. Bewertung (z. B. kritisch, unkritisch, warnend etc.) unterschiedlich farblich kodiert sind.

So ergibt sich auch in Fahrzeugvarianten ohne spezielle Anzeigeinstrumente sich eine einfache Möglichkeit zur Steigerung der Betriebs- und Fahrsicherheit.

Für den Hersteller des Zeigerinstruments können Betriebszustände wie etwa bei der Anschlagssuche des Tachometers durch Farb- und / oder Blinkcodes dargestellt werden. Weiterhin ist das Auslesen von Fehlerzuständen der Anzeigeelektronik / Mechanikeinheit per Farb-/Blinkcode denkbar.

Im folgenden Ausführungsbeispiel wird das Zeigerinstrument genauer schematisch beschrieben.

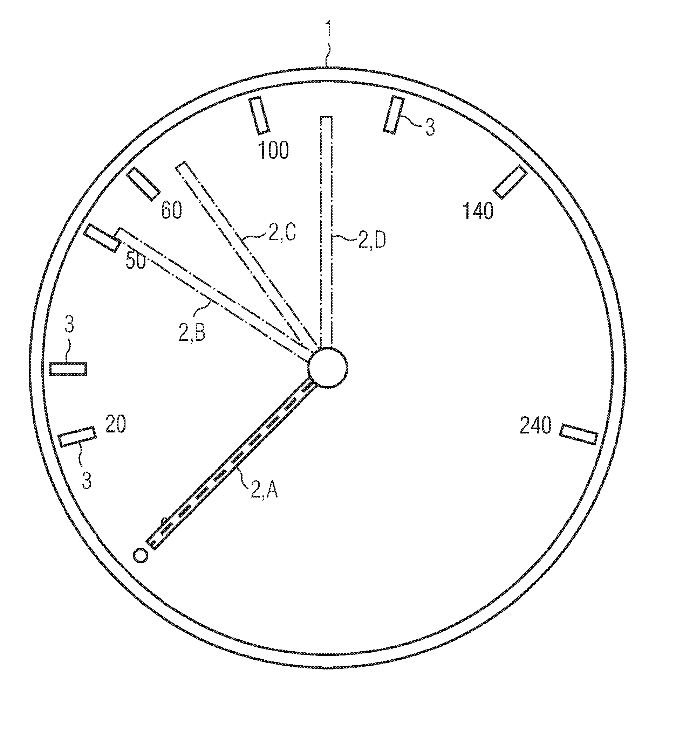

- FIG 1: zeigt eine Vorderansicht eines Tachometers mit verschiedenen Stellungen des Zeigers.

Der Tachometer 1 von FIG 1 zeigt einen drehbaren Zeiger (Tachonadel) 2, der in Abhängigkeit von der Fahrgeschwindigkeit seine Drehstellung ändert. Zur Anzeige der Fahrgeschwindigkeit ist zudem eine Skalenanzeige mit mehreren Skalenstrichen 3 bei unterschiedlichen Geschwindigkeiten vorgesehen, die hier ausgewählt bei '0', '20', '50', '60', '100', 140' und '240' liegen.

Der Zeiger 2 ist in vier verschiedenen Stellungen A-D gezeigt, bei denen er jeweils unterschiedlich farbkodiert ist. Interne und externe Zustandsfaktoren bestimmen den zeitlich veränderlichen Farbzustand des Zeigers 2.

In Stellung A befindet sich das Fahrzeug noch im Stand und führt eine Fahrzeuginitialisierung durch, zum Beispiel beim Hochfahren des Bordcomputers oder im Ablauf 'Zündung ein'. In diesem Zustand leuchtet oder blinkt der der Zeiger 2 gleichzeitig blau-weiß. Alternativ kann der Zeiger 2 abwechselnd blau und weiß leuchten.

In Stellung B leuchtet der Zeiger 2 dauerhaft grün, da die erlaubte Richtgeschwindigkeit von innerorts 50 km/h noch nicht wesentlich überschritten wurde. Die erlaubte Richtgeschwindigkeit kann beispielsweise mittels einer Straßenkarte mit GPS-Empfänger ermittelt werden.

In Stellung C leuchtet der Zeiger 2 dauerhaft rot, da die erlaubte Richtgeschwindigkeit von innerorts 50 km/h wesentlich überschritten wurde.

In Stellung C blinkt der Zeiger 2 rot, da zwar die erlaubte Richtgeschwindigkeit von außerorts 130 km/h nicht überschritten wurde, aber eine Warnmeldung über eine Glättegefahr auf dem vom Fahrzeug befahrenen Streckenabschnitt ausgegeben wurde. Die Warnmeldung kann beispielsweise mittels eines TMC-oder GPS-Systems ermittelt werden und mit der Fahrzeugposition korreliert werden.

Der Zeiger 2 und die Skalenstriche 3 sind aus transparentem oder transluzentem Kunststoff hergestellt und mit einer Mehrfarb-LED (ohne Abbildung) zur Einstellung der Beleuchtungsart, insbesondere Beleuchtungsfarbe, optisch wirksam verbunden. Eine Steuereinheit (ohne Abbildung) steuert die Mehrfarb-LED auf der Grundlage verschiedener Zustände bzw. Zustandswerte, wie beispielsweise oben beschrieben. Die Steuereinheit ist mit Geräten zur Einholung interner und externer Zustandsdaten gekoppelt, z. B. einem Temperatursensor, einem Drehzahlsensor, einem TMC-System oder einem Navigationsgerät.

Von der gezeigten Ausführungsform nicht umfasst ist ein Zeigerinstrument, das abhängig von einem vorbestimmten Zustand nicht beleuchtet wird; 'auf unterschiedliche Art beleuchtbar' umfasst somit hier nur einen Wechsel zwischen unterschiedlichen aktiven Beleuchtungen.

Allgemein umfasst ist allerdings ein Zeigerinstrument mit einem nicht beleuchteten oder nur schwach beleuchteten Zustand, wobei der Zustand vorzugsweise automatisch festgestellt wird und nicht von einem Fahrzeuginsassen eingestellt wird. So kann alternativ der Zeiger 2 in Stellung B nicht beleuchtet oder nur schwach beleuchtet sein. Statt oder zusätzlich zu einer Farbkodierung kann somit ein Helligkeitskodierung zur Zustandsanzeige eingesetzt werden. Insbesondere wird es bevorzugt, wenn der vorbestimmte Zustand keine Umgebungshelligkeit umfasst. Es wird bevorzugt, wenn der bestimmte Zustand einen fahrzeuginternen oder dem Fahrzeug übermittelten sicherheitsrelevanten Zustand umfasst.

Selbstverständlich ist die vorliegende Erfindung nicht auf die gezeigte Ausführungsform beschränkt.

## Patentansprüche

1. Zeigerinstrument für Fahrzeuge, das abhängig von einem vorbestimmten Zustand auf unterschiedliche Art beleuchtbar ist.

2. Zeigerinstrument (1) nach Anspruch 1, bei dem ein Zeiger (2) auf unterschiedliche Art beleuchtbar ist.

3. Zeigerinstrument (1) nach Anspruch 1 oder 2, bei dem eine Skalenanzeige (3) auf unterschiedliche Art beleuchtbar ist.

4. Zeigerinstrument (1) nach einem der vorhergehenden Ansprüche, das abhängig von dem vorbestimmten Zustand in unterschiedlichen Farben und / oder Helligkeiten beleuchtbar ist.

5. Zeigerinstrument (1) nach Anspruch 4, das gleichzeitig einfarbig oder mehrfarbig beleuchtbar ist.

6. Zeigerinstrument (1) nach Anspruch 4 oder 5, das wechselweise in den Farben grün oder rot oder in den Farben grün, gelb oder rot beleuchtbar ist.

7. Zeigerinstrument (1) nach einem der Ansprüche 4 bis 6, ferner aufweisend eine Mehrfarb-LED zur Beleuchtung des Zeigerinstrument (1)s.

8. Zeigerinstrument (1) nach einem der vorhergehenden Ansprüche, bei dem die Beleuchtung abhängig von dem vorbestimmten Zustand blinkend ausführbar ist.

9. Zeigerinstrument (1) nach einem der vorhergehenden Ansprüche, das als Tachometer (1) ausgeführt ist und das abhängig von einem Geschwindigkeitswert unterschiedlich beleuchtbar ist.

10. Zeigerinstrument (1) nach einem der Ansprüche 1 bis 8, das als Drehzahlmesser ausgeführt ist und das abhängig von einem Wert einer Motordrehzahl unterschiedlich beleuchtbar ist.

11. Zeigerinstrument (1) nach einem der Ansprüche 1 bis 8, das als Wassertemperaturanzeige ausgeführt ist und das abhängig von einem Wert einer Wassertemperatur unterschiedlich beleuchtbar ist.

12. Zeigerinstrument (1) nach einem der Ansprüche 1 bis 8, das als Ölstandsanzeige ausgeführt ist und das abhängig von einem Pegel eines Ölstands unterschiedlich beleuchtbar ist.

13. Zeigerinstrument (1) nach einem der vorhergehenden Ansprüche,
bei dem der vorbestimmte Zustand zumindest einen Zustand aus der folgenden Gruppe umfasst:
- Vorliegen einer Fahrzeuginitialisierung;
- Vorliegen eines Zeigeranschlags;
- Vorliegen einer Fehlererkennung
- Vorliegen einer Geschwindigkeitsbegrenzung;
- Vorliegen einer Stauwarnung;
- Vorliegen eines Parkverbots;
- Vorliegen einer Glättegefahr.

14. Fahrzeug mit einem Zeigerinstrument (1) nach einem der vorhergehenden Ansprüche, ferner aufweisend eine Steuereinheit zur Steuerung der Beleuchtungsart des Zeigerinstruments (1), wobei die Steuereinheit zur Steuerung der Beleuchtungsart eine Datenverbindung mit einem externen Dateninformationssystem aufweist, insbesondere einem TMC-System, einem streckenpostierten drahtlosen Informationssystem und / oder einem Navigationssystem.

15. Verfahren zum Beleuchten eines Zeigerinstruments (1) für Fahrzeuge, bei dem das Zeigerinstrument (1) abhängig von einem vorbestimmten Zustand auf unterschiedliche Art beleuchtet wird.

16. Verfahren nach Anspruch 15, bei dem das Zeigerinstrument (1) abhängig von einem vorbestimmten Zustand in unterschiedlichen Farben beleuchtet wird.

17. Verfahren nach Anspruch 15 oder 16, bei dem ein beweglicher Zeiger (2) des Zeigerinstruments (1) abhängig von einem vorbestimmten Zustand unterschiedlich beleuchtet wird.

18. Verfahren nach einem der Ansprüche 15 bis 17, bei dem der vorbestimmte Zustand zumindest einen Zustand aus der folgenden Gruppe umfasst:
- Erreichen eines Geschwindigkeitswerts;
- Erreichen eines Drehzahlwerts;
- Erreichen eines Wassertemperaturwerts;
- Erreichen eines Ölstandspegels;
- Vorliegen einer Fahrzeuginitialisierung;
- Vorliegen eines Zeigeranschlags;
- Vorliegen einer Fehlererkennung
- Vorliegen einer Geschwindigkeitsbegrenzung;
- Vorliegen einer Stauwarnung;
- Vorliegen eines Parkverbots;
- Vorliegen einer Glättegefahr.
